# DEMANDE DE BREVET EUROPEEN

(11) **EP 4 439 959 A1**
(43) Date de publication de la demande: **02.10.2024**
(21) Numéro de dépôt: 24165034.0
(22) Date de dépôt: 21.03.2024
(51) Int. Cl.: H02M 7/42, H02M 1/08, H02M 1/34, H02M 7/162, H02M 7/505, H02M 7/5387

(54) **CONVERTISSEUR DE TENSION**

(30) Priorité: 29.03.2023 FR 2303012
(71) Demandeur: STMicroelectronics International N.V., 1228 Plan-les-Ouates, Geneva (CH)
(72) Inventeur: HAGUE, Yannick, 37390 METTRAY (FR); THIENNOT, Guillaume, 37000 PERNAY (FR); LAUNOIS, Romain, 37000 TOURS (FR)
(74) Mandataire: Cabinet Beaumont

(57) **Abrégé**

La présente description concerne un procédé de commande d'un convertisseur d'une tension continue (VDC) en une tension alternative (VAC) comprenant un premier thyristor (T1), un deuxième thyristor (T2), un troisième thyristor (T3), un quatrième thyristor (T4), un premier transistor (Ml) et un deuxième transistor (M2),
dans lequel lorsque ladite tension alternative est égale à zéro et lorsque ledit premier thyristor (Tl) est conducteur et lesdits premier et deuxième transistors (Ml, M2) sont non conducteurs, alors un premier courant positif est envoyé à la gâchette dudit troisième thyristor (T3).

## Description

### Domaine technique

La présente description concerne de façon générale la problématique des conversions de tension, et plus précisément la problématique de la conversion d'une tension continue en une tension alternative. La présente description concerne, plus particulièrement, un dispositif ou circuit convertisseurs d'une tension continue en une tension alternative, et son procédé de commande.

### Technique antérieure

La conversion de tension, et en particulier la conversion d'une tension continue en une tension alternative, est un domaine technique en constante évolution et en constante croissance.

Il serait souhaitable de pouvoir améliorer, au moins en partie, certains aspects des circuits convertisseurs de tension connus, et notamment les procédés de commande de tels circuits convertisseurs.

### Résumé de l'invention

Il existe un besoin pour des dispositifs ou circuits convertisseurs de tension plus performants.

Il existe un besoin pour des dispositifs ou circuits convertisseurs d'une tension continue en une tension alternative plus performants.

Il existe un besoin pour des procédés de commande de dispositifs ou circuits convertisseurs de tension permettant de rendre de tels dispositifs ou circuits plus performants.

Un mode de réalisation pallie tout ou partie des inconvénients des procédés de commande connus d'un dispositif ou circuit de conversion.

Un mode de réalisation prévoit un procédé de commande d'un convertisseur d'une tension continue en une tension alternative comprenant :
- un premier thyristor dont l'anode est reliée à un premier noeud d'entrée et dont la cathode est reliée à un deuxième noeud de sortie ;
- un deuxième thyristor dont l'anode est reliée au deuxième noeud de sortie et dont la cathode est reliée à un troisième noeud d'entrée ;
- un troisième thyristor dont l'anode est reliée au deuxième noeud de sortie et dont la cathode est reliée au premier noeud d'entrée ;
- un quatrième thyristor dont l'anode est reliée au troisième noeud d'entrée et dont la cathode est reliée au deuxième noeud de sortie ;
- un premier transistor dont une première borne de conduction est reliée au premier noeud d'entrée et donc une deuxième borne de conduction est reliée à un quatrième noeud de sortie ;
- un deuxième transistor dont une première borne de conduction est reliée au quatrième noeud de sortie et donc une deuxième borne de conduction est reliée au troisième noeud d'entrée ;
dans lequel lorsque ladite tension alternative est égale à zéro et lorsque ledit premier thyristor est conducteur et lesdits premier et deuxième transistors sont non conducteurs, alors un premier courant positif est envoyé à la gâchette dudit troisième thyristor.

Un autre mode de réalisation prévoit un convertisseur d'une tension continue en une tension alternative comprenant :
- un premier thyristor dont l'anode est reliée à un premier noeud d'entrée et dont la cathode est reliée à un deuxième noeud de sortie ;
- un deuxième thyristor dont l'anode est reliée au deuxième noeud de sortie et dont la cathode est reliée à un troisième noeud d'entrée ;
- un troisième thyristor dont l'anode est reliée au deuxième noeud de sortie et dont la cathode est reliée au premier noeud d'entrée ;
- un quatrième thyristor dont l'anode est reliée au troisième noeud d'entrée et dont la cathode est reliée au deuxième noeud de sortie ;
- un premier transistor dont une première borne de conduction est reliée au premier noeud d'entrée et donc une deuxième borne de conduction est reliée à un quatrième noeud de sortie ;
- un deuxième transistor dont une première borne de conduction est reliée au quatrième noeud de sortie et donc une deuxième borne de conduction est reliée au troisième noeud d'entrée ;
dans lequel lorsque ladite tension alternative est égale à zéro et lorsque ledit premier thyristor est conducteur et lesdits premier et deuxième transistors sont non conducteurs, alors un premier courant positif est envoyé à la gâchette dudit troisième thyristor.

Selon un mode de réalisation, ledit premier courant est délivré par un circuit d'alimentation.

Selon un mode de réalisation, lorsque ledit deuxième thyristor est conducteur et lesdits premier et deuxième transistors sont non conducteurs, alors un deuxième courant positif est envoyé à la gâchette dudit quatrième thyristor.

Selon un mode de réalisation, ledit deuxième courant est délivré par un circuit d'alimentation.

Selon un mode de réalisation, lesdits premier et deuxième transistors sont des transistors de type NMOS.

Selon un mode de réalisation, lesdits premier deuxième, troisième et quatrième thyristors sont adaptés à recevoir une tension maximale de l'ordre de 1200 V entre leurs bornes de conduction.

Selon un mode de réalisation, ledit convertisseur comprend, en outre, un condensateur reliant le premier noeud d'entrée audit troisième noeud d'entrée.

Selon un mode de réalisation, ledit convertisseur comprend, en outre, une bobine reliant ledit quatrième noeud de sortie à un cinquième noeud milieu entre lesdits premier et deuxième transistors.

Selon un mode de réalisation, ladite tension continue est adaptée à être appliquée entre le premier noeud d'entrée et ledit troisième noeud d'entrée, et ladite tension alternative est adaptée à être fournie entre ledit deuxième noeud de sortie et ledit quatrième noeud de sortie.

Un autre mode de réalisation prévoit un chargeur comprenant un circuit décrit précédemment.

Un autre mode de réalisation prévoit un panneau solaire comprenant un circuit décrit précédemment.

Un autre mode de réalisation prévoit un véhicule automobile comprenant un circuit décrit précédemment.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un mode de réalisation d'un circuit convertisseur de tension ;
la figure 2 représente un graphique illustrant le fonctionnement du circuit de la figure 1 ;
la figure 3 représente deux graphiques illustrant le fonctionnement du circuit de la figure 1 ;
la figure 4 représente un schéma électrique illustrant un mode de mise en oeuvre d'un procédé de commande du circuit de la figure 1 ;
la figure 5 représente un exemple de réalisation d'un circuit d'alimentation du circuit de la figure 1 ;
la figure 6 représente un graphique illustrant le fonctionnement du circuit d'alimentation de la figure 5 ; et
la figure 7 représente une courbe illustrant un détail du procédé de commande de la figure 4.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

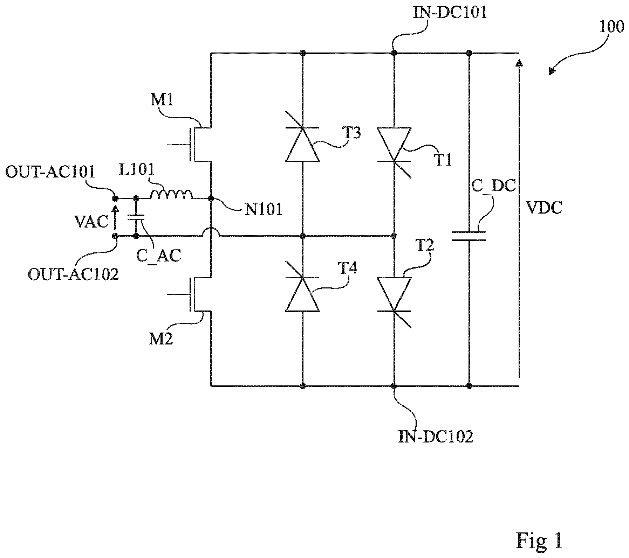

Par souci de clarté, seuls les étapes et éléments utiles à la compréhension des modes de réalisation décrits ont été représentés et sont détaillés. En particulier, le fonctionnement classique détaillé d'un circuit convertisseur de tension du type de celui décrit en relation avec la figure 1 n'est pas décrit ici, et est considéré comme étant à la portée de la personne du métier.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

La figure 1 représente un circuit 100 convertisseur de tension.

Le circuit 100 permet de convertir une tension continue VDC en une tension alternative VAC. Selon un mode de réalisation, le circuit 100 est un circuit convertisseur bidirectionnel, et permet, en outre, de convertir la tension alternative VAC en la tension continue VDC. Les modes de réalisation décrits ci-après concernent uniquement le fonctionnement en conversion de la tension continue VDC en la tension alternative VAC du circuit 100. Selon un exemple préféré, le circuit 100 est adapté à recevoir une tension continue VDC minimale de 380 V, et à fournir une tension alternative de tension efficace minimale de 85 V et ayant une fréquence minimale de l'ordre de 40Hz.

Selon un mode de réalisation, le circuit 100 est un circuit de conversion bidirectionnel utilisant un montage de type totem pole, c'est-à-dire un montage cascode (push-pull) dans lequel les composants actifs sont des transistors identiques, recevant des même signaux identiques en opposition de phase.

Selon un mode de réalisation, le circuit 100 comprend deux noeuds électroniques IN-DC101 et IN-DC102 dont la différence de potentiels est égale à la tension continue VDC. Comme le cas décrit ici concerne la conversion de la tension continue VDC en la tension alternative VAC, les noeuds IN-DC101 et IN-DC102 sont désignés ci-après comme des noeuds d'entrée du circuit 100.

De façon similaire, selon un mode de réalisation, le circuit 100 comprend deux noeuds électroniques OUT-AC101 et OUT-AC102 dont la différence de potentiels est égale à la tension alternative VAC. Les noeuds OUT-AC101 et OUT-AC102 sont désignés ci-après comme des noeuds de sortie du circuit 100.

Le circuit 100 comprend un condensateur C_DC reliant les noeuds d'entrée IN-DC101 et IN-DC102.

Le circuit 100 comprend, en outre, une première branche, entre ses noeuds d'entrée IN-DC101 et IN-DC102, comportant un thyristor T1 et un thyristor T2. Une anode du thyristor T1 est reliée, de préférence connectée, au noeud d'entrée IN-DC101, et une cathode du thyristor T1 est reliée, de préférence connectée, au noeud de sortie OUT-AC102. Une anode du thyristor T2 est reliée, de préférence connectée, au noeud de sortie OUT-AC102, et une cathode du thyristor T2 est reliée, de préférence connectée, au noeud d'entrée IN-DC102. Les gâchettes des thyristors T1 et T2 sont adaptées à recevoir des courants de commande.

Le circuit 100 comprend, en outre, une deuxième branche, entre ses noeuds d'entrée IN-DC101 et IN-DC102, comportant un thyristor T3 et un thyristor T4. Une cathode du thyristor T3 est reliée, de préférence connectée, au noeud d'entrée IN-DC101, et une anode du thyristor T3 est reliée, de préférence connectée, au noeud de sortie OUT-AC102. Une cathode du thyristor T4 est reliée, de préférence connectée, au noeud de sortie OUT-AC102, et une anode du thyristor T4 est reliée, de préférence connectée, au noeud d'entrée IN-DC102. Les gâchettes des thyristors T3 et T4 sont adaptées à recevoir des courants de commande.

Le circuit 100 comprend, une troisième branche, entre ses noeuds d'entrée IN-DC101 et IN-DC102 comportant deux transistors M1 et M2 formant un montage de type totem pole. Selon un mode de réalisation, les transistors M1 et M2 sont des transistors à effet de champ à grille isolée, ou transistors à effet de champ à structure métal-oxyde-semiconducteur, plus couramment appelés transistors MOSFET (Metal-Oxide-semiconductor Field-Effect Transistor) ou transistors MOS. Plus particulièrement, les transistors M1 et M2 sont des transistors de type MOS à canal N, aussi appelés transistors NMOS. Une première borne de conduction du transistor M1 est reliée, de préférence connectée, au noeud d'entrée IN-DC101, et une deuxième borne de conduction du transistor M1 est reliée, de préférence connectée, à un noeud N101. Une première borne de conduction du transistor M2 est reliée, de préférence connectée, au noeud N101, et une deuxième borne de conduction du transistor M2 est reliée, de préférence connectée, au noeud d'entrée IN-DC101. Le noeud N101 est aussi appelé noeud milieu entre les transistors M1 et M2. Les bornes de commande des transistors M1 et M2 sont adaptées à recevoir des tensions de commande.

Le circuit 100 comprend, en outre, une bobine L101 reliant le noeud N101 au noeud de sortie OUT-AC101.

Le circuit 100 comprend, en outre et pour finir, un condensateur C_AC de filtrage, optionnel, reliant les noeuds de sortie OUT-AC101 et OUT-AC102.

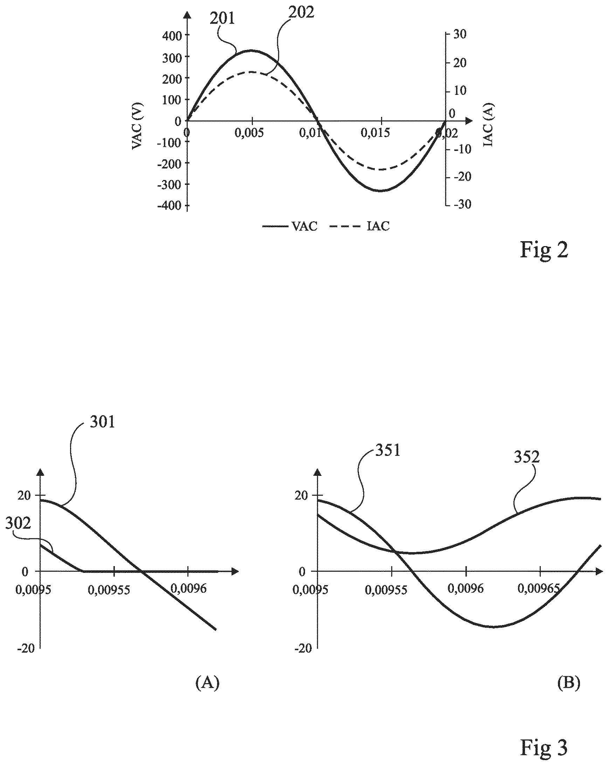

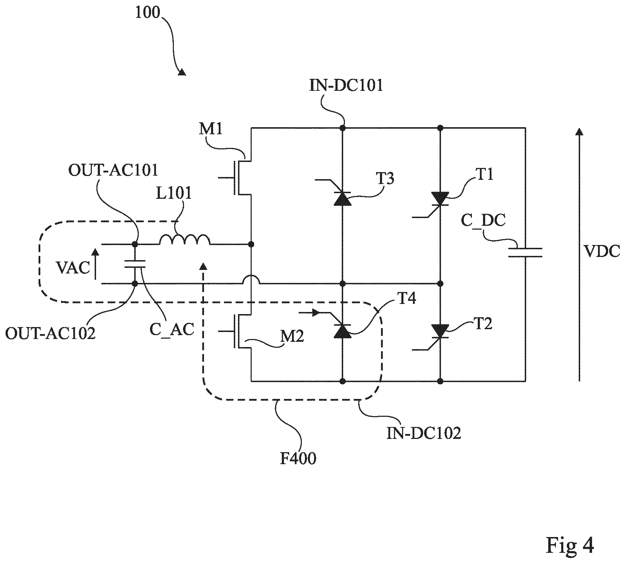

Le fonctionnement du circuit 100 est décrit en relation avec les figures 2 à 4. En particulier, un mode de mise en oeuvre d'un procédé de commande du circuit 100 est décrit en relation avec la figure 4.

La figure 2 représente deux courbes 201 et 202 illustrant le fonctionnement du circuit 100 décrit en relation avec la figure 1.

Plus particulièrement, les courbes 201 et 202 sont deux chronogrammes illustrant, respectivement, l'évolution de la tension alternative VAC et d'un courant alternatif IAC fournis tout deux en sortie du circuit 100. Plus particulièrement, comme dit précédemment, la tension alternative VAC est fournie entre les noeuds OUT-AC101 et OUT-AC102. Le courant IAC est fourni au niveau du noeud OUT-AC101.

Lorsque la tension VAC et le courant IAC sont positifs, le thyristor T1 est commandé pour être non conducteur, et le thyristor T2 est commandé pour être conducteur. Le transistor M1 est commandé pour être périodiquement conducteur, et le transistor M2 est commandé pour être non conducteur. Les thyristors T3 et T4 sont non conducteurs.

Lorsque la tension VAC et le courant IAC sont négatifs, le thyristor T1 est commandé pour être conducteur, et le thyristor T2 est commandé pour être non conducteur. Le transistor M1 est commandé pour être non conducteur, et le transistor M2 est commandé pour être périodiquement conducteur. Les thyristors T3 et T4 sont non conducteurs.

La figure 3 comprend deux graphiques (A) et (B) illustrant plus en détail le fonctionnement du circuit 100 décrit en relation avec la figure 1.

Le graphique (A) comprend une courbe 301 et une courbe 302. Les courbes 301 et 302 sont deux chronogrammes illustrant, respectivement, l'évolution d'une tension alternative VC_AC et d'un courant IL. Plus particulièrement, la tension alternative VC_AC est la tension entre les bornes du condensateur C_AC. Le courant IL est le courant fourni en sortie de la bobine L101.

De même, le graphique (B) comprend une courbe 351 et une courbe 352. Les courbes 351 et 352 sont deux chronogrammes illustrant, respectivement, l'évolution de la tension alternative VC_AC et du courant IL définis précédemment.

Les graphiques (A) et (B) illustrent le fonctionnement du circuit 100 de la figure 1 juste avant le moment où la tension alternative VAC et le courant alternatif IAC changent de signe. Dans l'exemple illustré en figure 3, les graphiques (A) et (B) illustrent le fonctionnement du circuit 100 au moment où la tension alternative VAC et le courant alternatif IAC sont positifs et s'apprêtent à devenir négatifs. A ce moment-là, le thyristor T2, qui était conducteur, devient non conducteur, et le thyristor T1, qui était non conducteur, devient conducteur après le passage à zéro de la tension alternative VAC. Les transistors M1 et M2 sont, à ce moment là non conducteurs. Ainsi, le courant IL traversant la bobine est égal au courant traversant le thyristor T2.

Le graphique (A) illustre un cas de fonctionnement normal, pendant lequel le courant IL présent dans la bobine L101 passe à zéro avant que la tension VC_AC du condensateur C_AC ne s'inverse. Le courant présent dans le thyristor T2 est égal au courant IL, mais est inférieur au courant de maintien du thyristor T2. Ainsi, le thyristor T2 est rendu non conducteur. Selon un exemple, le courant présent dans le thyristor T2 est, en partie, annulé grâce à la diode intrinsèque du transistor M2.

Le graphique (B) illustre un cas de fonctionnement anormal, pendant lequel lorsque la tension VC_AC du condensateur C_AC passe à zéro, le courant IL présent dans la bobine et circulant dans le thyristor T2 est supérieur au courant de maintien du thyristor T2. Le thyristor T2 est encore conducteur lorsque la tension VC_AC s'inverse. Dans ce cas, la diode intrinsèque du transistor M2 ne suffit pas à annuler le courant du thyristor T2. Cette inversion de la tension VC_AC provoque une augmentation du courant dans le thyristor T2 et empêche son ouverture. Ce phénomène de résonnance est un phénomène parasite qui retarde l'arrêt du thyristor T2. Un procédé de commande du circuit 100 décrit en relation avec la figure 4 permet d'éviter ce cas de fonctionnement anormal.

De façon similaire, ce phénomène de résonnance parasite peut apparaître également lorsque la tension alternative VAC et le courant alternatif IAC sont négatifs et deviennent positifs. Dans ce cas, c'est le thyristor T1 qui était conducteur et qui devient non conducteur.

La figure 4 représente le circuit 100 décrit en relation avec la figure 1 et permet d'illustrer un mode de mise en oeuvre d'un procédé de commande du circuit 100.

Selon un mode de réalisation, pour éviter l'apparition du phénomène de résonance parasite décrit en relation avec la figure 3, au moment où la tension alternative VAC et le courant alternatif IAC changent de signe, le thyristor T3 ou T4 étant en antiparallèle avec le thyristor T1 ou T2 qui s'arrête de conduire, est rendu conducteur pour absorber le courant résiduel traversant la bobine L101. Pour cela, un courant positif est appliqué à la gâchette dudit thyristor T3 ou T4.

Plus particulièrement, dans le cas illustré en figure 4, la tension alternative VAC et le courant alternatif IAC étaient positifs et deviennent négatifs. Le thyristor T2 s'arrête de conduire, et le thyristor T4 est rendu conducteur par application d'un courant de commande positif sur sa gâchette. Le parcours des charges du courant résiduel de la bobine L101 est illustré en figure 4 par une flèche F400 pointillée. En effet, dans cette configuration le thyristor T4 est polarisé en inverse, et ses performances s'apparentent à celles d'un transistor bipolaire à faible gain.

Dans le cas inverse, c'est-à-dire, lorsque la tension alternative VAC et le courant alternatif IAC étaient négatifs et deviennent positifs, le thyristor T1 s'arrête de conduire, et le thyristor T3 est rendu conducteur par application d'un courant de commande sur sa gâchette.

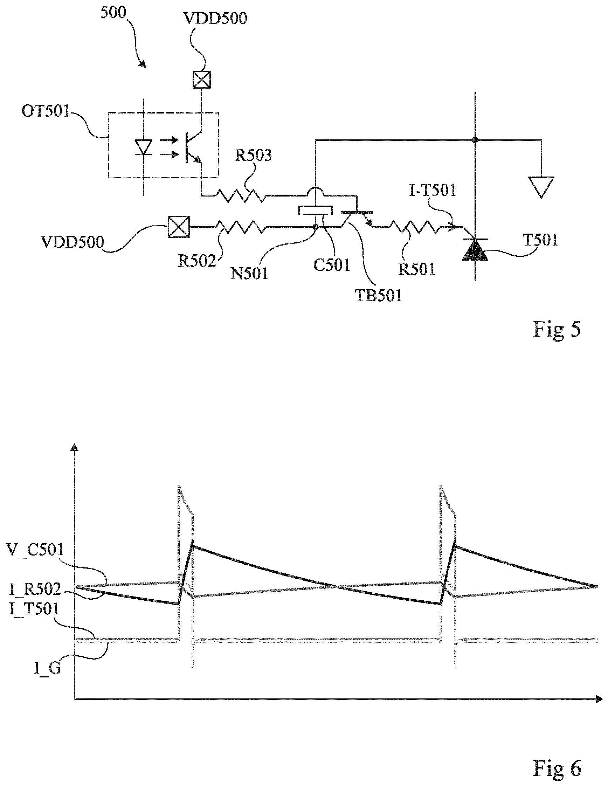

Un exemple de réalisation d'un circuit de commande des thyristors T3 et T4 permettant d'appliquer ledit courant de commande à la gâchette des transistors T3 et T4 et son fonctionnement est décrit en relation avec les figures 5 et 6.

La figure 5 représente un exemple de réalisation d'un circuit de commande 500 d'un thyristor T501 utilisé pour fournir un courant de commande I_T501 à la gâchette du thyristor T501. Selon un exemple, le thyristor T501 est le thyristor T3 ou T4 du circuit 100 décrit en relation avec la figure 1.

Le circuit de commande 500 comprend deux résistances R501 et R502, et un transistor TB501 bipolaire de type NPN. Une première borne de la résistance R501 est reliée, de préférence connectée, à un noeud de sortie du circuit 500, c'est-à-dire en pratique à la gâchette du thyristor T501. Une deuxième borne de la résistance R501 est reliée, de préférence connectée, à l'émetteur du transistor TB501. Le collecteur du transistor TB501 est reliée, de préférence connectée, à une première borne de la résistance R502, aussi appelée noeud N501. Une deuxième borne de la résistance R502 est reliée, de préférence connectée, à un noeud recevant une tension d'alimentation VDD500, par exemple de l'ordre de 5 V.

Le circuit de commande 500 comprend, en outre, un condensateur C501 reliant le noeud N501 à la cathode du thyristor T501. Selon un exemple, le condensateur C501 est un condensateur polarisé. Selon un exemple, la cathode du thyristor est un noeud de référence, recevant par exemple, un potentiel de référence comme la masse.

Le circuit de commande 500 comprend, en outre, une résistance R503 et un optocoupleur OT501. Une première borne de la résistance est reliée, de préférence connectée, à la base du transistor TB501. Une deuxième borne de la résistance R503 est reliée, de préférence connectée, à une première borne de conduction de l'optocoupleur OT501. Une deuxième borne de conduction de l'optocoupleur OT501 est reliée, de préférence connectée, au noeud recevant la tension d'alimentation VDD500.

La figure 6 représente un graphique illustrant le fonctionnement du circuit de commande 500 pendant la mise en oeuvre du procédé de commande décrit en relation avec la figure 4.

Plus particulièrement, le graphique de la figure 6 comprend :
- une courbe IG représentant l'évolution temporelle du courant de commande fournit à la gâchette du thyristor T501 ;
- une courbe I_T501 représentant l'évolution temporelle du courant arrivant sur la cathode du thyristor T501 ;
- une courbe I_R502 représentant l'évolution temporelle du courant de charge de la résistance R502 ; et
- une courbe V_C501 représentant l'évolution temporelle de la tension aux bornes du condensateur C501.

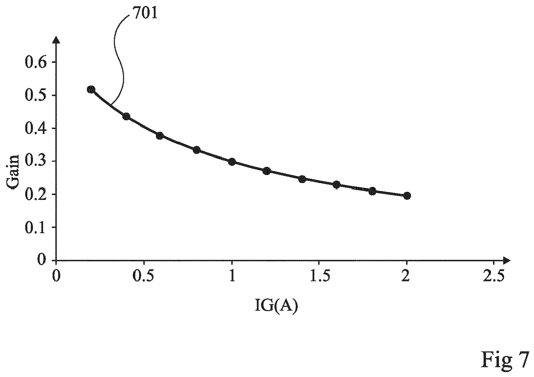

Le circuit de commande 500 est dimensionné pour fournir un courant de commande positif de l'ordre de 4,5 A à la gâchette du thyristor à chaque fois que la tension alternative VAC et le courant alternatif IAC passent à zéro, comme décrit précédemment. Un exemple de détermination de la valeur du courant de commande est décrit en relation avec la figure 7.

Pour ce faire, le condensateur C501 est chargé par la tension d'alimentation VDD500 et la résistance R502. Périodiquement, l'optocoupleur OT501 rend le transistor bipolaire TB501 passant. Le condensateur C501 se décharge alors et fournit le courant de commande à la gâchette du thyristor T501.

La figure 7 représente un graphique 701 qui illustre l'évolution du gain d'un thyristor polarisé en inverse en fonction du courant appliqué sur sa gâchette.

Le graphique 701 indique que plus le courant de gâchette est grand, plus le gain du thyristor est faible. Ainsi, pour mettre en oeuvre le procédé de commande décrit en relation avec la figure 5, il est nécessaire d'utiliser un courant de commande assez élevé, mais pendant une durée assez courte, ce qui permet de ne pas consommer beaucoup d'énergie.

Des exemples particuliers d'application du circuit 100 et du procédé de commande décrit en relation avec la figure 4 sont les convertisseurs d'énergie bidirectionnels utilisés dans le domaine de l'automobile, comme notamment le domaine des véhicules automobiles hybrides ou électriques, le domaine des chargeurs à haute puissance, comme les chargeurs automobiles destinés aux habitations privées, et/ou destinés aux lieux publics, le domaine des énergies renouvelables, comme les panneaux solaires, et le domaine des alimentations électriques sans interruption, etc. Les convertisseurs d'énergie concernés par ces domaines sont adaptées à convertir une tension alternative en une tension continue et/ou une tension continue en une tension alternative.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Procédé de commande d'un convertisseur d'une tension continue (VDC) en une tension alternative (VAC) comprenant :
- un premier thyristor (T1) dont l'anode est reliée à un premier noeud (IN-DC101), le premier noeud étant un noeud d'entrée, et dont la cathode est reliée à un deuxième noeud (OUT-AC102), le deuxième noeud étant un noeud de sortie, ;
- un deuxième thyristor (T2) dont l'anode est reliée au deuxième noeud (OUT-AC102) et dont la cathode est reliée à un troisième noeud (IN-DC102), le troisième noeud étant un noeud de sortie ;
- un troisième thyristor (T3) dont l'anode est reliée au deuxième noeud (OUT-AC102) et dont la cathode est reliée au premier noeud (IN-DC101) ;
- un quatrième thyristor (T4) dont l'anode est reliée au troisième noeud (IN-DC102) et dont la cathode est reliée au deuxième noeud (OUT-AC102) ;
- un premier transistor (M1) dont une première borne de conduction est reliée au premier noeud d'entrée (IN-DC101) et dont une deuxième borne de conduction est reliée à un quatrième noeud (OUT-AC101), le quatrième noeud étant un noeud de sortie ;
- un deuxième transistor (M2) dont une première borne de conduction est reliée au quatrième noeud (OUT-AC101) et dont une deuxième borne de conduction est reliée au troisième noeud (IN-DC101) ;
dans lequel d'une tension continue (VDC) est reçue entre le premier noeud et le troisième noeud, et ladite tension alternative (VAC) est fournie entre le deuxième noeud et le quatrième noeud, et
dans lequel ledit procédé comprend une étape d'envoi d'un premier courant positif à la gâchette dudit troisième thyristor (T3), lorsque ladite tension alternative est égale à zéro et lorsque ledit premier thyristor (T1) est conducteur et lesdits premier et deuxième transistors (M1, M2) sont non conducteurs.

2. Convertisseur d'une tension continue (VDC) en une tension alternative (VAC) comprenant :
- un premier thyristor (T1) dont l'anode est reliée à un premier noeud (IN-DC101), le premier noeud étant un noeud d'entrée, et dont la cathode est reliée à un deuxième noeud (OUT-AC102), le deuxième noeud étant un noeud de sortie ;
- un deuxième thyristor (T2) dont l'anode est reliée au deuxième noeud (OUT-AC102) et dont la cathode est reliée à un troisième noeud (IN-DC102), le troisième noeud étant un noeud d'entrée ;
- un troisième thyristor (T3) dont l'anode est reliée au deuxième noeud (OUT-AC102) et dont la cathode est reliée au premier noeud (IN-DC101) ;
- un quatrième thyristor (T4) dont l'anode est reliée au troisième noeud (IN-DC102) et dont la cathode est reliée au deuxième noeud (OUT-AC102) ;
- un premier transistor (M1) dont une première borne de conduction est reliée au premier noeud (IN-DC101) et dont une deuxième borne de conduction est reliée à un quatrième noeud (OUT-AC101), le quatrième noeud étant un noeud de sortie ;
- un deuxième transistor (M2) dont une première borne de conduction est reliée au quatrième noeud (OUT-AC101) et dont une deuxième borne de conduction est reliée au troisième noeud (IN-DC101) ;
dans lequel d'une tension continue (VDC) est reçue entre le premier noeud et le troisième noeud, et ladite tension alternative (VAC) est fournie entre le deuxième noeud et le quatrième noeud, et
dans lequel lorsque ladite tension alternative est égale à zéro et lorsque ledit premier thyristor (T1) est conducteur et lesdits premier et deuxième transistors (M1, M2) sont non conducteurs, alors un premier courant positif est envoyé à la gâchette dudit troisième thyristor (T3).

3. Procédé selon la revendication 1, ou dispositif selon la revendication 2, dans lequel ledit premier courant est délivré par un circuit d'alimentation.

4. Procédé selon la revendication 1 ou 3, ou dispositif selon la revendication 2 ou 3, dans lequel lorsque ledit deuxième thyristor (T2) est conducteur et lesdits premier et deuxième transistors (M1, M2) sont non conducteurs, alors un deuxième courant positif est envoyé à la gâchette dudit quatrième thyristor (T4).

5. Procédé ou dispositif selon la revendication 4, dans lequel ledit deuxième courant est délivré par un circuit d'alimentation.

6. Procédé selon l'une quelconque des revendications 1, 3 à 5, ou dispositif selon l'une quelconque des revendications 2 à 5, dans lequel lesdits premier et deuxième transistors (M1, M2) sont des transistors de type NMOS.

7. Procédé selon l'une quelconque des revendications 1, 3 à 6, ou dispositif selon l'une quelconque des revendications 2 à 6, dans lequel lesdits premier deuxième, troisième et quatrième thyristors (T1, T2, T3, T4) sont adaptés à recevoir une tension maximale de l'ordre de 1200 V entre leurs bornes de conduction.

8. Procédé selon l'une quelconque des revendications 1, 3 à 7, ou dispositif selon l'une quelconque des revendications 2 à 7, dans lequel ledit convertisseur comprend, en outre, un condensateur (C_DC) reliant le premier noeud (IN-DC101) audit troisième noeud (IN-DC102).

9. Procédé selon l'une quelconque des revendications 1, 3 à 8, ou dispositif selon l'une quelconque des revendications 2 à 8, dans lequel ledit convertisseur comprend, en outre, une bobine (L101) reliant ledit quatrième noeud à un cinquième noeud (N101) milieu entre lesdits premier et deuxième transistors (M1, M2).

10. Procédé selon l'une quelconque des revendications 1, 3 à 9, ou dispositif selon l'une quelconque des revendications 2 à 9, dans lequel ladite tension continue (VDC) est adaptée à être appliquée entre le premier noeud (IN-DC101) et ledit troisième noeud (IN-DC102), et ladite tension alternative (VAC) est adaptée à être fournie entre ledit deuxième noeud (OUT-AC101) et ledit quatrième noeud (OUT-AC102).

11. Chargeur comprenant un circuit selon l'une quelconque des revendications 1, 3 à 10.

12. Panneau solaire comprenant un circuit selon l'une quelconque des revendications 1, 3 à 10.

13. Véhicule automobile comprenant un circuit selon l'une quelconque des revendications 1, 3 à 10.
